# EUROPEAN PATENT APPLICATION

(11) **EP 4 836 485 A1**
(43) Date of publication of application: **04.11.2026**
(21) Application number: 24922217.5
(22) Date of filing: 31.01.2024
(51) Int. Cl.: H04W 16/28, H04W 72/1268

(54) **USER EQUIPMENT, NODE, AND COMMUNICATION METHOD**

(71) Applicant: Kyocera Corporation, Kyoto-shi, Kyoto 612-8501 (JP)
(72) Inventor: IKUTA Koji, Kyoto-shi, Kyoto 612-8501 (JP); FUJISHIRO Masato, Kyoto-shi, Kyoto 612-8501 (JP)
(74) Representative: TBK
(86) International application number: PCT/JP2024/003075
(87) International publication number: WO 2025/163808

(57) **Abstract**

A user equipment is a user equipment configured to perform wireless communication with a node in a mobile communication system, the user equipment comprising: a controller configured to map data to be transmitted to at least some of layers of a physical uplink shared channel, the data to be transmitted being identical between the at least some layers; and a transmitter configured to transmit the physical uplink shared channel to the node.

## Description

### TECHNICAL FIELD

The present invention relates to a user equipment, a node, and a communication method.

### BACKGROUND OF INVENTION

In New Radio (NR), which is a fifth generation (5G) standard standardized by the 3rd generation partnership project (3GPP (trade name), the same applies hereinafter), the 3GPP being a standardization project for mobile communication systems, transmission methods of a codebook type and non-code type are defined as methods for transmitting a physical uplink shared channel (PUSCH). In the non-codebook type, a precoder determined by the node is applied to the transmission of the PUSCH.

A problem with the non-codebook type transmission method is that it takes a long time before the precoder is applied to the PUSCH. In the non-codebook type transmission method, two round trips of communication are made between a node in a network of a mobile communication system (also simply referred to as a "node") and a user equipment (UE), from when the node transmits a CSI-RS to the UE until when the node receives a PUSCH to which a precoder has been applied.

Thus, particularly in an environment in which a propagation channel varies significantly, the propagation channel may vary significantly between the time the precoder is calculated and the time the precoder is applied, resulting in a non-optimal precoder. An environment in which the propagation channel varies significantly is, for example, an environment in which a UE moves at high speed, or an environment in which wireless communication using high frequency bands such as millimeter waves or sub-terahertz waves is used. In wireless communication using the latter high frequency band, the beam is sharper than in the low frequency band, and thus even a slight change in the environment can cause larger channel variations. When the precoder is not optimal, there exist cases where the throughput is reduced due to an increase in inter-stream interference in the received signal and a deterioration in modulation accuracy.

### CITATION LIST

### NON-PATENT LITERATURE

Non-Patent Document 1: 3GPP Technical Specification: TS 38.214 V18.0.0 (2023-09)

### SUMMARY

According to a first aspect, provided is a user equipment configured to perform wireless communication with a node in a mobile communication system, the user equipment including: a controller configured to map data to be transmitted to at least some of layers of a physical uplink shared channel, the data to be transmitted being identical between the at least some layers; and a transmitter configured to transmit the physical uplink shared channel to the node.

According to a second aspect, provided is a node configured to perform wireless communication with a user equipment in a mobile communication system, the node including: a transmitter configured to transmit group information to the user equipment, the group information being for dividing to cause at least some layers of a physical uplink shared channel to be a group in which data to be transmitted is identical between the at least some layers; and a receiver configured to receive, from the user equipment, the physical uplink shared channel in which the data to be transmitted is mapped to the at least some layers, the data to be transmitted being identical between the at least some layers.

According to a third aspect, provided is a communication method used in a user equipment that performs wireless communication with a node in a mobile communication system, the communication method including: mapping data to be transmitted to at least some of layers of a physical uplink shared channel, the data to be transmitted being identical between the at least some layers; and transmitting the physical uplink shared channel to the node.

According to a fourth aspect, provided is a communication method used in a node that performs wireless communication with a user equipment in a mobile communication system, the communication method including: transmitting group information to the user equipment, the group information being for dividing to cause at least some layers of a physical uplink shared channel to be a group in which data to be transmitted is identical between the at least some layers; and receiving, from the user equipment, the physical uplink shared channel in which the data to be transmitted is mapped to the at least some layers, the data to be transmitted being identical between the at least some layers.

### BRIEF DESCRIPTION OF THE DRAWINGS

FIG. 1 is a diagram illustrating a configuration example of a mobile communication system according to an embodiment.
FIG. 2 is a diagram illustrating a configuration example of a protocol stack of a U-plane radio interface that handles data.
FIG. 3 is a diagram illustrating a configuration example of a protocol stack of a C-plane radio interface that handles signaling (control signal).
FIG. 4 is a diagram illustrating a general procedure in which a precoder determined in a non-codebook type is applied to transmit a physical uplink shared channel.
FIG. 5 is a diagram illustrating a configuration example of a user equipment (UE) according to the embodiment.
FIG. 6 is a diagram illustrating a configuration example of a node according to the embodiment.
FIG. 7 is a diagram illustrating an example of a system operation according to a first embodiment.
FIG. 8 is a diagram illustrating an example of a system operation according to a second embodiment.
FIG. 9 is a diagram illustrating an example of a system operation according to a variation of the second embodiment.
FIG. 10 is a diagram illustrating an example of a system operation according to a third embodiment.
FIG. 11 is a diagram illustrating an example of a system operation according to a first variation of the third embodiment.
FIG. 12 is a diagram illustrating an example of a system operation according to a second variation of the third embodiment.
FIG. 13 is a diagram illustrating an example of a system operation according to a third variation of the third embodiment.

### DESCRIPTION OF EMBODIMENTS

A mobile communication system according to embodiments will be described below with reference to the drawings. In the description of the drawings, the same or similar parts are denoted by the same or similar reference numerals.

### (1) First Embodiment

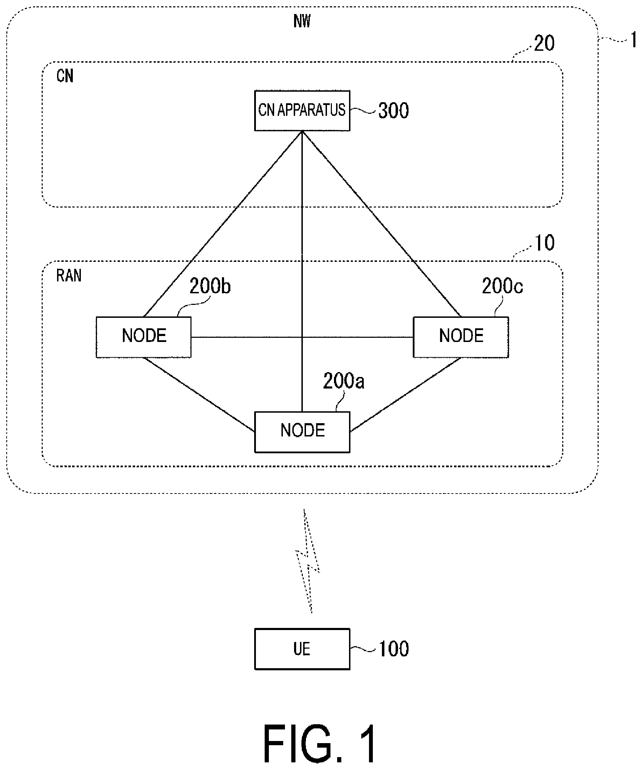

A first embodiment will be described with reference to FIGs. 1 to 7.

### (1.1) System Configuration Example

FIG. 1 is a diagram illustrating a configuration example of a mobile communication system according to an embodiment. The mobile communication system according to the embodiment is a system conforming to the 3GPP standard. For example, the mobile communication system according to the embodiment may be a 5th generation (5G) system or a 6th generation (6G) system.

The mobile communication system includes a network (NW) 1 and a user equipment (UE) 100. The UE 100 is a mobile communication apparatus and performs wireless communication with the NW 1. The UE 100 may be an apparatus used by a user and may be, for example, a mobile phone terminal (including a smartphone), a tablet terminal, a laptop personal computer (PC), a communication module (including a communication card or chipset), a sensor or an apparatus provided in a sensor, a vehicle or an apparatus provided in a vehicle (a vehicle UE), or an aircraft or an apparatus provided in an aircraft (an aerial UE). The UE 100 may be a mobile termination (MT) of a relay device such as an integrated access and backhaul (IAB) or a network-controlled repeater (NCR).

The NW 1 includes a Radio Access Network (RAN) 10 and a Core Network (CN) 20. When the mobile communication system is a 5th Generation System (5GS), the RAN 10 is referred to as a Next Generation Radio Access Network (NG-RAN) and the CN 20 is referred to as a 5G Core Network (5GC).

The RAN 10 includes a plurality of nodes 200 (nodes 200a to 200c in the illustrated example). The nodes 200 are connected to each other via an inter-node interface. The node 200 is also referred to as a base station. The node 200 may be configured (i.e., functionally divided) into a Central Unit (CU) and a Distributed Unit (DU), and both units may be connected by a fronthaul interface. When the mobile communication system is a 5GS, the node 200 is referred to as a gNB, the inter-node interface is referred to as an Xn interface, and the fronthaul interface is referred to as an F1 interface.

Each node 200 manages one or a plurality of cells. The node 200 performs wireless communication with the UE 100 that has established a connection with its own cell. Each node 200 has a Radio Resource Management (RRM) function, a routing function for user data (also simply referred to as "data"), a measurement control function for mobility control and scheduling, and the like. Note that a "cell" is used as a term indicating a minimum unit of a wireless communication area. The "cell" is also used as a term representing a function or a resource for performing wireless communication with the UE 100. One cell belongs to one carrier frequency (also simply referred to as a "frequency").

The CN 20 includes a CN apparatus 300. The CN apparatus 300 may include a control plane (C-plane) apparatus associated with the C-plane, and a user plane (U-plane) apparatus associated with the U-plane. The C-plane apparatus performs various mobility control, paging, and the like for the UE 100. The C-plane apparatus communicates with the UE 100 using Non-Access Stratum (NAS) signaling. The U-plane apparatus controls data transfer. When the mobile communication system is a 5GS, the C-plane apparatus is referred to as an Access and Mobility Management Function (AMF), the U-plane apparatus is referred to as a User Plane Function (UPF), and the interface between the node 200 and the CN apparatus 300 is referred to as an NG interface.

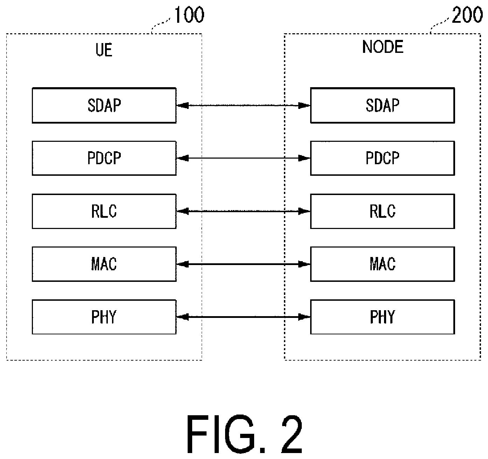

FIG. 2 is a diagram illustrating a configuration example of a protocol stack of a U-plane radio interface that handles data.

The protocol of the U-plane radio interface includes, for example, a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs encoding/decoding, modulation/demodulation, antenna mapping/demapping, and resource mapping/demapping. Data and control information are transmitted between the PHY layer of the UE 100 and the PHY layer of the node 200 via a physical channel. Note that the PHY layer of the UE 100 receives Downlink Control Information (DCI) transmitted from the node 200 on a Physical Downlink Control Channel (PDCCH). Specifically, the UE 100 performs blind decoding of the PDCCH by using a radio network temporary identifier (RNTI) and acquires a successfully decoded DCI as a DCI addressed to the UE. The DCI transmitted from the node 200 has CRC parity bits scrambled by the RNTI added thereto.

The MAC layer performs data priority control and retransmission processing using Hybrid ARQ (HARQ), and the like. Data and control information are transmitted between the MAC layer of UE 100 and the MAC layer of node 200 via a transport channel. The MAC layer of the node 200 includes a scheduler. The scheduler determines the uplink and downlink transport format (a transport block size and a Modulation and Coding Scheme (MCS)) and the resources to be allocated to the UE 100.

The RLC layer transmits data to the RLC layer on the reception side by using functions of the MAC layer and the PHY layer. Data and control information are transmitted between the RLC layer of the UE 100 and the RLC layer of the node 200 via a logical channel.

The PDCP layer performs header compression/decompression, encryption/decryption, and the like.

The SDAP layer performs mapping between an IP flow, which is a unit for QoS control by the CN 20, and a radio bearer, which is a unit for QoS control by an Access Stratum (AS). Note that, when the RAN is connected to the EPC, the SDAP need not be provided.

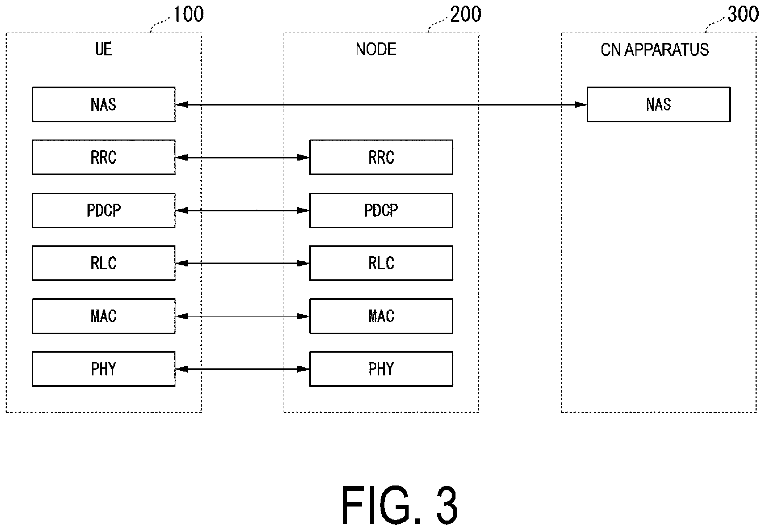

FIG. 3 is a diagram illustrating a configuration example of a protocol stack of a C-plane radio interface that handles signaling (control signal).

The protocol stack of the C-plane radio interface includes, for example, a Radio Resource Control (RRC) layer and a Non-Access Stratum (NAS) layer instead of the SDAP layer illustrated in FIG. 2.

RRC signaling for various configurations is transmitted between the RRC layer of the UE 100 and the RRC layer of the node 200. The RRC layer controls a logical channel, a transport channel, and a physical channel according to establishment, re-establishment, and release of a radio bearer. When there exists a connection (RRC connection) between the RRC of the UE 100 and the RRC of the node 200, the UE 100 is in an RRC connected state. When there exists no connection (RRC connection) between the RRC of the UE 100 and the RRC of the node 200, the UE 100 is in an RRC idle state. When the connection between the RRC of the UE 100 and the RRC of the node 200 is suspended, the UE 100 is in an RRC inactive state.

The NAS layer (also simply referred to as "NAS"), which is located above the RRC layer, performs session management, mobility management, and the like. NAS signaling is transmitted between the NAS layer of the UE 100 and the NAS layer of the CN apparatus 300. The UE 100 includes an application layer other than the protocol of the radio interface. The layer below the NAS layer is referred to as an AS layer (also simply referred to as "AS").

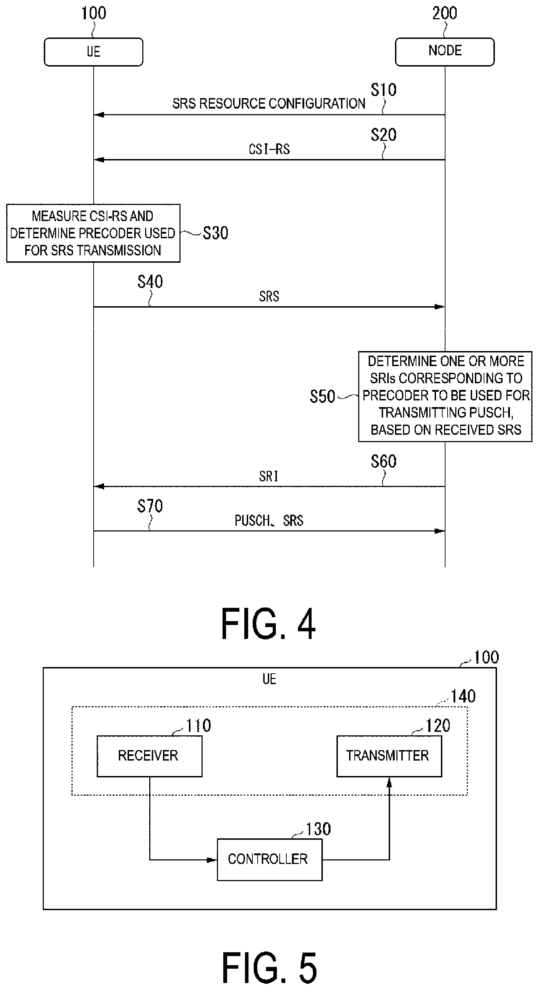

FIG. 4 is a diagram illustrating a general procedure for transmitting a physical uplink shared channel (PUSCH) according to a non-codebook type.

In step S10, the node 200 transmits a resource configuration of a sounding reference signal (SRS) to the UE 100. The UE 100 receives the resource configuration of the SRS. By this resource configuration, the resources (frequency, time, antenna port) of the SRS are set.

In step S20, the node 200 transmits a CSI-RS to the UE 100. The UE 100 receives the CSI-RS.

In step S30, the UE 100 measures the resource of the CSI-RS transmitted in step S20. The UE 100 calculates a precoder to be used for transmitting the SRS based on the measurement of the resource of the CSI-RS.

In step S40, the UE 100 applies the calculated precoder and transmits up to four SRSs to the node 200. For transmitting these SRSs, the SRS resources set by the resource configuration received in step S10 are used. One SRS antenna port is configured for the SRS resource of each SRS.

In step S50, the node 200 determines one or more SRS resource indicators (SRIs) corresponding to a precoder to be used for transmitting the PUSCH, based on the received SRS.

In step S60, the node 200 transmits the determined one or more SRIs to the UE 100. Here, one or more SRIs are included and transmitted in downlink control information (DCI) transmitted on a physical downlink control channel (PDCCH). Here, one or more SRIs are stored in an SRS resource indicator area included in the DCI. The UE 100 receives one or more SRIs. In the non-codebook type transmission method, the node 200 does not notify the UE 100 of a transmit rank indicator (TRI), but the UE 100 determines the TRI from the number of SRIs.

In step S70, the UE 100 transmits the PUSCH to the node 200 using the same antenna port as the antenna port for the SRS. The antenna ports for the SRS are indicated by the received one or more SRIs. Thus, the same precoder as that used for the SRS of the SRS resource indicated by the received SRI is applied to the transmission of the PUSCH.

According to this procedure, two round trips of communication are made between the node 200 and the UE 100 from when the node 200 transmits the CSI-RS to the UE 100 until when the node 200 receives the PUSCH to which the precoder is applied. Thus, particularly in an environment in which a propagation channel varies significantly, there exists a problem in that the precoder may not be optimal. As a result, there exist cases where the throughput is reduced due to an increase in inter-stream interference and a deterioration in modulation accuracy.

### (1.2) Configuration Example of User Equipment

FIG. 5 is a diagram illustrating a configuration example of a user equipment (UE) 100 according to the embodiment.

The UE 100 includes a receiver 110, a transmitter 120, and a controller 130. The receiver 110 and the transmitter 120 constitute a wireless communicator 140 that performs wireless communication with the node 200.

The receiver 110 performs various receptions under the control of the controller 130. The receiver 110 includes an antenna and a reception device. The reception device converts a radio signal received through the antenna into a baseband signal (a received signal) and outputs the resulting signal to the controller 130. The transmitter 120 performs various transmissions under the control of the controller 130. The transmitter 120 includes an antenna and a transmission device. The transmission device converts a baseband signal (a transmission signal) output by the controller 130 into a radio signal and transmits the resulting signal through the antenna.

The controller 130 performs various types of control and processing in the UE 100. The operations of the UE 100 described above and to be described below may also be an operation under the control of the controller 130. The controller 130 includes at least one processor and at least one memory. The memory stores a program to be executed by the processor and information to be used for processing in the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing.

The UE 100 configured in this manner performs wireless communication with the node 200 in the mobile communication system. The receiver 110 receives a first reference signal transmitted by the node 200. The controller 130 measures the resource of the first reference signal, calculates a precoder to be used for transmitting the PUSCH based on the measurement of the resource of the first reference signal, and applies the precoder to the PUSCH. The transmitter 120 transmits, to the node 200, the PUSCH to which the precoder has been applied. The controller 130 maps the data to be transmitted to a plurality of layers of the PUSCH so that the data to be transmitted differs between the plurality of layers.

The controller 130 maps second data to be transmitted, which is different from the first data to be transmitted, to a second PUSCH that is transmitted next to the first PUSCH to which the precoder has been applied by the transmitter 120.

In the present embodiment, the first reference signal is a downlink reference signal used to calculate a precoder to be applied to the transmission of the PUSCH. The first reference signal is, for example, a CSI-RS in 3GPP, but may also be other reference signals such as the DM-RS or a new reference signal introduced in the 6th generation. In the following, an example will be described in which the first reference signal is a CSI-RS.

This allows the UE 100 to transmit a PUSCH with a fewer number of round trips of communication than in the procedure of FIG. 4. Even in an environment in which the propagation channel varies significantly, the UE 100 can suppress a decrease in throughput due to an increase in inter-stream interference and a deterioration in modulation accuracy by reducing the number of round trips of communication.

In the present embodiment, the controller 130 determines the number of layers of the PUSCH based on the measurement of the resource of the first reference signal. In the present embodiment, the controller 130 calculates a precoder to be used for transmitting a second reference signal based on measurement of the resource of the first reference signal, selects an antenna port for the determined number of layers of the PUSCH from the antenna ports of the second reference signal, and uses the selected antenna port for the number of layers for transmitting the PUSCH. Thus, the portion of the precoder applied to the transmission of the second reference signal, which is used for the second reference signal of the selected antenna port, is used for the transmission of the PUSCH.

In the present embodiment, the second reference signal is an uplink reference signal used by the node 200 to receive the PUSCH. The second reference signal is, for example, a sounding reference signal (SRS) in 3GPP, but may also be other reference signals such as the DM-RS or a new reference signal introduced in the 6th generation. In the following, an example will be described in which the second reference signal is an SRS.

### (1.3) Configuration Example of Node

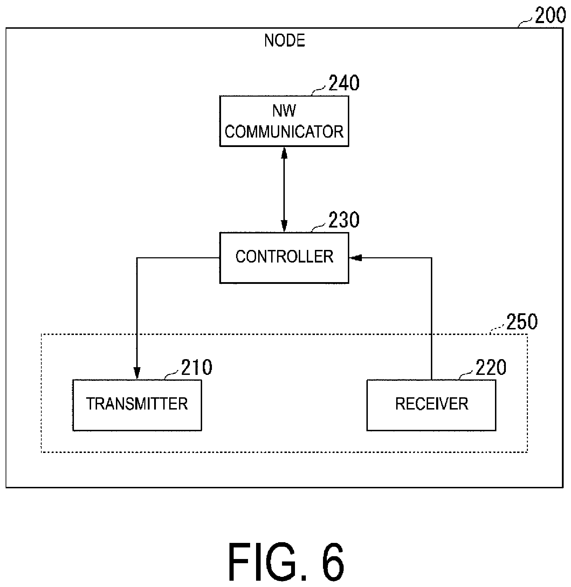

FIG. 6 is a diagram illustrating a configuration example of a node 200 (base station, gNB) according to the embodiment.

The node 200 includes a transmitter 210, a receiver 220, the controller 230, and a NW communicator 240. The transmitter 210 and the receiver 220 constitute a wireless communicator 250 that performs wireless communication with the UE 100.

The transmitter 210 performs various transmissions under the control of the controller 230. The transmitter 210 includes an antenna and a transmission device. The transmission device converts a baseband signal (a transmission signal) output by the controller 230 into a radio signal and transmits the resulting signal through the antenna. The receiver 220 performs various types of reception under control of the controller 230. The receiver 220 includes an antenna and a reception device. The reception device converts a radio signal received through the antenna into a baseband signal (a received signal) and outputs the resulting signal to the controller 230.

The controller 230 performs various types of control and processing in the node 200. The operations of the node 200 described above and below may be operations under control of the controller 230. The controller 230 includes at least one processor and at least one memory. The memory stores a program to be executed by the processor and information to be used for processing in the processor. The processor may include a baseband processor and a CPU. The baseband processor performs modulation and demodulation, coding and decoding, and the like of a baseband signal. The CPU executes the program stored in the memory to thereby perform various types of processing.

The NW communicator 240 is connected to adjacent nodes via an inter-node interface. The NW communicator 240 is connected to the CN apparatus 300 via a node-CN interface.

The node 200 configured in this manner performs wireless communication with the UE 100 in the mobile communication system. The transmitter 210 transmits the first reference signal to the UE 100. The receiver 220 receives the PUSCH from the UE 100. The PUSCH is a PUSCH transmitted by applying a precoder calculated by the UE 100 based on the measurement of the resource of the first reference signal.

### (1.4) Example of System Operation

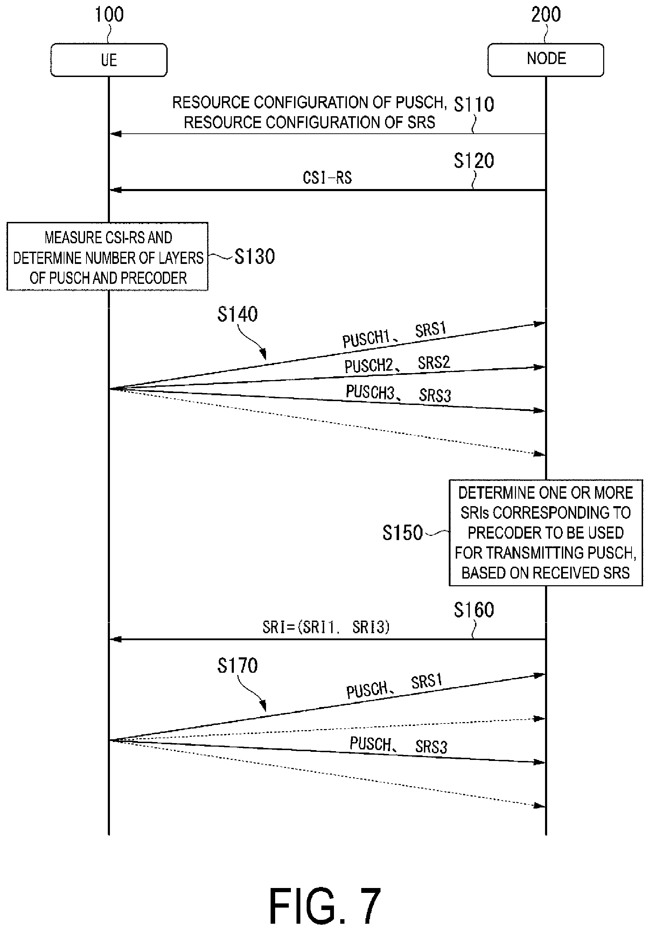

FIG. 7 is a diagram illustrating an example of a system operation according to the first embodiment. The system operation according to the first embodiment is a method of transmitting a PUSCH to which a UE-determined precoder is applied, that is, a method of transmitting a PUSCH to which a precoder determined by the UE 100 is applied. Note that duplicated descriptions of operations same as and/or similar to those in FIG. 4 will be omitted.

In step S110, the node 200 transmits a resource configuration of the PUSCH and a resource configuration of the SRS to the UE 100. The node 200 transmits the resource configuration to the UE 100, for example, at the RRC layer. Note that the node 200 may transmit the resource configuration to the UE 100 at the MAC layer, or may transmit the resource configuration to the UE 100 by including the resource configuration in DCI. The UE 100 receives a resource configuration of the PUSCH and a resource configuration of the SRS.

In step S120, the node 200 transmits a CSI-RS to the UE 100. The UE 100 receives the CSI-RS.

Note that the node 200 may transmit the CSI-RS to the UE 100 before transmitting the resource configuration of the PUSCH and the resource configuration of the SRS described above. In other words, the order in which the processing of step S120 and the processing of step S110 are executed may be reversed from the order illustrated in FIG. 7.

In step S130, the UE 100 measures the resource of the CSI-RS transmitted in step S120. The UE 100 calculates a precoder to be applied to the transmission of the PUSCH and the SRS based on the measurement of the resource of the CSI-RS. The UE 100 determines the number of layers of the PUSCH based on the measurement of the resource of the CSI-RS.

The method by which the UE 100 calculates a precoder to be applied to the transmission of the PUSCH and the SRS based on the measurement of the resource of the CSI-RS is, for example, a method based on singular value decomposition. The UE 100 expresses the results of the measurement of the resource of the CSI-RS as a matrix having rows for the number of antenna ports of the node 200 and columns for the number of antenna ports of the UE 100 (maximum number of layers of the PUSCH). The UE 100 performs singular value decomposition on the matrix. The UE 100 determines whether the magnitude of the singular value obtained by the singular value decomposition is greater than a predetermined threshold. The UE 100 determines that a beam can be transmitted when the magnitude of the singular value is greater than a predetermined threshold. Eigenvectors corresponding to the singular values determined to be transmittable correspond to the precoder weights of the beams (layers) determined to be transmittable, and the number of such eigenvectors corresponds to the number of transmittable layers.

Note that the method by which the UE 100 calculates a precoder to be applied to the transmission of the PUSCH based on the measurement of the resource of the CSI-RS is not limited to a method based on singular value decomposition, and other methods may be used.

In step S140, the UE 100 transmits, to the node 200, the SRS of up to four layers to which the calculated precoder has been applied, and the PUSCH to which the calculated precoder has been applied. Here, the UE 100 transmits the PUSCH to the node 200 using the same antenna port as the antenna port for the SRS. The node 200 receives the SRS and PUSCH. Note that the timing at which the UE 100 transmits the PUSCH to the node 200 is scheduled, for example, by DCI. The UE 100 transmits the PUSCH to the node 200 using the resources set in the resource configuration of the PUSCH received from the node 200 in step S110.

Note that the UE 100 transmits the SRS to the node 200 using SRS resources of at least the number of layers described above. The number of layers described above is the number of layers determined by the UE 100 in step S130 on the basis of the measurement of the CSI-RS resource (that is, the number of PUSCH layers determined by the UE 100). Note that the UE 100 selects an antenna port for the determined number of layers of the PUSCH from the antenna ports for the SRS, and uses the selected antenna port for transmitting the PUSCH. Thus, the PUSCH with the determined number of layers of the PUSCH is transmitted to the node 200 by applying the same precoder as that used for transmitting the SRS of the selected antenna port.

Here, the UE 100 maps the first data to be transmitted to a plurality of layers of the PUSCH so that the data to be transmitted to be mapped differs between the plurality of layers. In the example illustrated in FIG. 7, the UE 100 maps the first data to be transmitted to three layers of PUSCH1, PUSCH2, and PUSCH3 such that the first data to be transmitted differs among the three layers.

Meanwhile, although an example of a case has been described in the example illustrated in FIG. 7 where, in step S140, the UE 100 transmits three SRSs (SRS1, SRS2, and SRS3) and three PUSCHs (PUSCH1, PUSCH2, and PUSCH3) using three of the maximum four layers, the operation of the UE 100 in the present disclosure is not limited to this. The UE 100 may use some of the SRS antenna ports only for SRS transmission, and may not use those antenna ports for PUSCH transmission. For example, the UE 100 may use the SRS2 antenna port only for SRS2 transmission and not for PUSCH2 transmission. The UE 100 may transmit four SRSs using all of the four layers at maximum. The maximum number of layers may be other than four.

In step S150, the node 200 determines one or more SRIs corresponding to the precoder to be used for PUSCH transmission on the basis of the received SRS. In the example illustrated in FIG. 7, SRI1 and SRI3 are determined.

In step S160, the node 200 transmits the determined one or more SRIs to the UE 100. Here, the DCI transmitted on the PDCCH includes one or more SRIs. Here, one or more SRIs are stored in an SRS resource indicator area included in the DCI. The UE 100 receives one or more SRIs. In the PUSCH transmission method using the UE-determined precoder, as in the non-codebook type transmission method, the node 200 does not notify the TRI, but the UE 100 determines the TRI from the number of SRIs.

In step S170, the UE 100 transmits the PUSCH to the node 200 using the same antenna port as the antenna port for the SRS. The antenna ports for the SRS are indicated by the received one or more SRIs. Thus, the same precoder as that used for the SRS of the SRS resource indicated by the received SRI is applied to the transmission of the PUSCH. Meanwhile, the UE 100 may transmit the SRS to the node 200 before transmitting the PUSCH to the node 200 in step S170. Meanwhile, the UE 100 transmits the SRS to the node 200 using SRS resources of at least the number of layers described above.

Here, in step S170, the UE 100 maps, to the PUSCH, the second data to be transmitted different from the first data to be transmitted mapped to the PUSCH in step S140. That is, the UE 100 maps the second data to be transmitted, which is different from the first data to be transmitted, to the PUSCH transmitted next to the PUSCH to which the precoder determined by the UE 100 has been applied. With this configuration, in the present embodiment, the communication speed can be improved up to twice as compared with the conventional procedure illustrated in FIG. 4.

The timing when UE 100 transmits the PUSCH to the node 200 in step S170 is scheduled by the DCI, as the timing when the UE 100 transmits the PUSCH to the node 200 in step S140 is scheduled. Meanwhile, the timing when the UE 100 transmits the PUSCH to the node 200 in step S170 may be scheduled by the DCI transmitted by the node 200 to UE 100 in step S160.

Meanwhile, the transmission of the SRS and the PUSCH from the UE 100 to the node 200 in step S140 may be executed multiple times before the processing operations from step S150 to step S170 are executed next time. The number of times that the SRS and the PUSCH are transmitted need not match.

The processing operations from step S140 to step S170 may be executed multiple times before the processing operations from step S110 to step S130 are executed next time.

As described above, the method of transmitting a PUSCH to which the UE-determined precoder has been applied according to the present embodiment includes an operation of the UE 100 transmitting a PUSCH to which the UE-determined precoder has been applied (described as an operation of step S140) and an operation of the UE 100 transmitting a PUSCH to which the same precoder as the SRS of the SRS resource indicated by the SRI received from the node 200 has been applied (described as an operation of step S170). The UE 100 switches between the operation of step S140 and the operation of step S170 depending on whether or not the SRI has been received from the node 200. In this case, when the UE 100 has not received the SRI from the node 200, the operation of step S140 is performed. On the other hand, when the SRI has been received from the node 200, the UE 100 performs the operation of step S170. As another example, the CSI-RS received by the UE 100 in step S120 may include information for switching between the operation of step S140 and the operation of step S170. As another example, when the PUSCH is transmitted next time after the operation of step S140 is performed, a predetermined operation procedure indicating that the operation of step S170 is performed may be stored in the UE 100 in advance.

Meanwhile, the operation of step S140 is, in other words, an operation in which the UE 100 determines a precoder for transmitting the PUSCH. On the other hand, the operation of step S170 is, in other words, an operation in which the node 200 determines a precoder for transmitting the PUSCH.

Here, in the present embodiment, the PUSCH transmission method to which the UE-determined precoder illustrated in FIG. 7 is applied, that is, the PUSCH transmission method to which the precoder determined by the UE 100 is applied, also assumes time division duplex (TDD). The UE 100 can measure the CSI-RS received from the node 200 (that is, can perform channel estimation). The UE 100 utilizes channel reciprocity due to TDD to calculate a precoder to be used for transmitting the PUSCH based on the measurement of the CSI-RS, and also determines the number of layers of the PUSCH. In other words, the UE 100 has the ability to determine the precoder (beam) to be used for transmitting the PUSCH. The advantage of the method of transmitting a PUSCH to which a UE-determined precoder is applied is that the precoder used for transmission can be calculated from the received signal by utilizing channel reciprocity due to TDD. In other words, by executing a series of controls regarding the transmission of the PUSCH in the UE 100 without communicating with the node 200, the precoder can be determined in a shorter time than in the conventional procedure illustrated in FIG. 4.

Note that, in the present embodiment, an example has been described in which the UE 100 (controller 130) determines the number of layers of the PUSCH based on measurement of the resource of the first reference signal (CSI-RS), while not limited thereto. The number of layers of the PUSCH does not need to be determined by the UE 100. In this case, for example, the node 200 determines the number of layers of the PUSCH, and the node 200 notifies the UE 100 of the determined number of layers. As another example, the number of layers of the PUSCH may be determined in advance, and the UE 100 may store the number of layers in advance.

In the present embodiment, an example has been described in which the UE 100 (controller 130) calculates a precoder to be used for transmitting a second reference signal (SRS) based on measurement of the resource of the first reference signal (CSI-RS), selects an antenna port for the determined number of layers of the PUSCH from the antenna ports of the second reference signal (SRS), and transmits the PUSCH using the selected antenna port, while not limited thereto. The UE 100 may transmit the PUSCH using an antenna port other than the antenna port of the second reference signal (SRS).

### (2) Second Embodiment

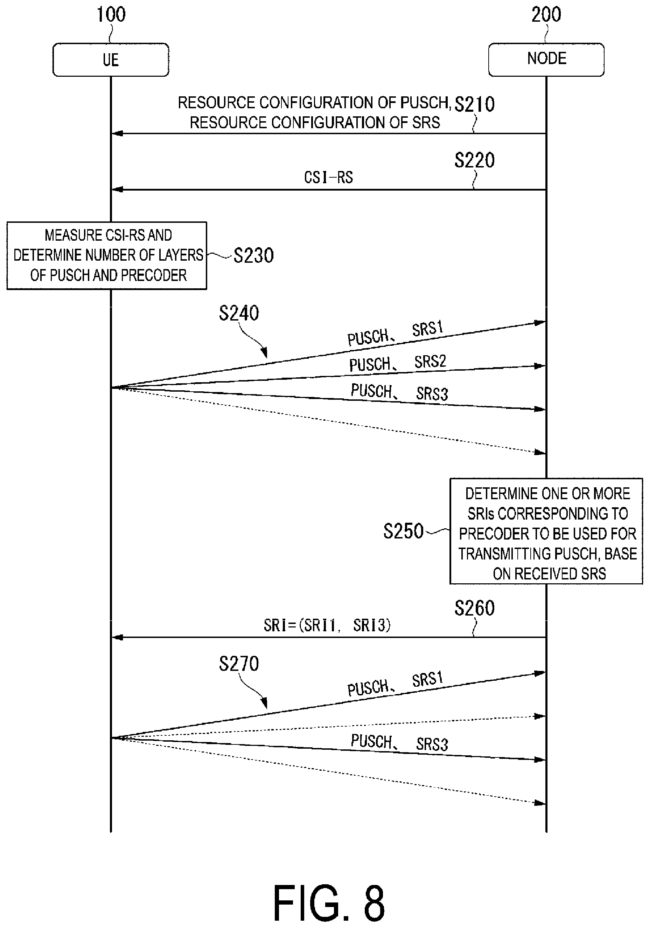

A second embodiment will be described with reference to FIG. 8, focusing mainly on the differences from the first embodiment. In the first embodiment described above, the UE 100 can transmit a PUSCH with a fewer number of round trips of communication than in the procedure of FIG. 4. Therefore, even in an environment in which the propagation channel varies significantly, the UE 100 can suppress a decrease in throughput due to an increase in inter-stream interference and a deterioration in modulation accuracy by reducing the number of round trips of communication. However, when the reception quality suddenly deteriorates due to causes such as a line failure, a loss of data to be transmitted may occur. For example, in an environment where wireless communication using a high frequency band such as a sub-terahertz wave is used, when a deterioration in reception quality suddenly occurs, such as when a shielding object crosses a transmission path, a deterioration in reception quality may occur.

In the second embodiment, the controller 130 maps the data to be transmitted to all of layers of the PUSCH so that the data to be transmitted is the same between the all layers of the PUSCH.

### (2.1) Example of System Operation

An example of a system operation according to the second embodiment will be described with reference to FIG. 8, focusing mainly on the differences from the first embodiment. FIG. 8 is a diagram illustrating an example of a system operation according to the second embodiment. Meanwhile, the processing operations of steps S210, S220, S230, S250, S260, and S270 are the same as and/or similar to the processing operations of steps S110, S120, S130, S150, S160, and S170 in FIG. 7, and therefore descriptions thereof will be omitted.

In step S240, the UE 100 transmits the PUSCH and SRS to the node 200. Here, the UE 100 maps the data to be transmitted to the layers of the PUSCH so that the data to be transmitted is the same between all the layers of the PUSCH. In other words, the UE 100 multiplexes the same data to be transmitted across all layers of the PUSCH.

With this configuration, the reliability of the data to be transmitted can be improved in the present embodiment.

Meanwhile, as in step S170 in FIG. 7, UE 100 maps the second data to be transmitted, which is different from the first data to be transmitted mapped to the PUSCH in step S240, to the PUSCH in step S270.

As described above, in the second embodiment, the same data to be transmitted is multiplexed across all the layers of the PUSCH in step S240. When the node 200 receives the data to be transmitted as received data, the node 200 restores the original data to be transmitted from the multiplexed received data. Meanwhile, any method may be used for the restoration. For example, the node 200 selects the received data having the highest quality from among the multiplexed received data at the MAC layer. As another example, the node 200 may soft-combine the multiplexed received data at the physical (PHY) layer. When soft combining is used for restoration, the UE 100 may transmit the multiplexed data to be transmitted with different HARQ redundancy versions (that is, redundant configurations) between layers.

### (2.2) Variation of Second Embodiment

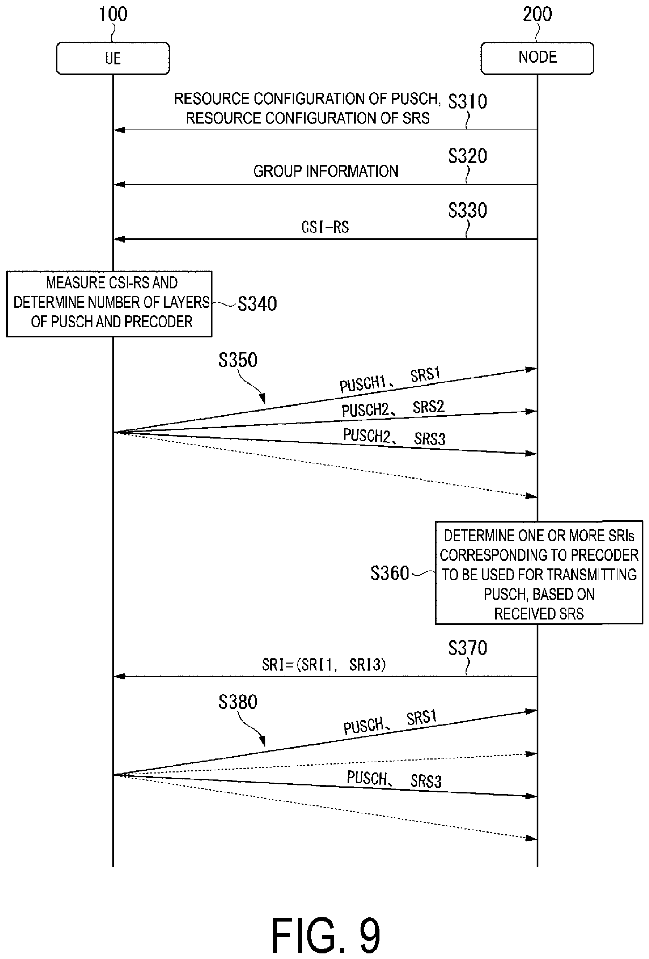

A variation of the second embodiment will be described with reference to FIG. 9, focusing mainly on the differences from the second embodiment. In the first embodiment described above, a case has been described in which the UE 100 multiplexes the same data to be transmitted across all layers of the PUSCH. While the reliability of the data to be transmitted is improved by multiplexing the same data, the transmission efficiency decreases.

In the variation of the second embodiment, the receiver 110 receives group information from the node 200. The group information is information for dividing at least some of the layers of the PUSCH into groups in which the data to be transmitted is the same between the layers. The controller 130 maps the data to be transmitted to at least some of the layers of the PUSCH on the basis of the group information so that the data to be transmitted is the same between at least some of the layers of the PUSCH. The controller 130 selects one or more PUSCH groups from among the plurality of PUSCH groups indicated by the group information, and selects a layer of the PUSCH in which the data to be transmitted is the same between the layers thereof on the basis of the selected PUSCH group. That is, in the variation of the second embodiment, the UE 100 selects layers of the PUSCH in which the data to be transmitted is the same between the layers thereof on the basis of the group information. With this configuration, in the variation of the second embodiment, a decrease in the transmission efficiency of the data to be transmitted can be suppressed.

### (2.1) Example of System Operation

An example of a system operation according to the variation of the second embodiment will be described with reference to FIG. 9, focusing mainly on the differences from the second embodiment. FIG. 9 is a diagram illustrating an example of a system operation according to the variation of the second embodiment. Meanwhile, the processing operations of S310, S330, S340, S360, S370, and S380 are the same as and/or similar to the processing operations of steps S210, S220, S230, S250, S260, and S270 in FIG. 8, and therefore descriptions thereof will be omitted.

In step S320, the node 200 transmits the group information to the UE 100. The UE 100 receives the group information. Meanwhile, the node 200 may transmit the group information to the UE 100 immediately after the UE 100 starts up.

In an example of the present embodiment, the group information indicates a PUSCH group of a layer of the PUSCH in which the data to be transmitted is the same between the layers. In an example of the present embodiment, the group information is information for selecting one or more PUSCH groups.

In the group information, the PUSCH group is indicated by, for example, a set of layers. In this case, the group information indicates, for example, a first PUSCH group, a second PUSCH group, and a third PUSCH group. For example, the first PUSCH group indicates the first layer. The second PUSCH group indicates a set of the second layer and the third layer. The third PUSCH group indicates a set of the first layer, the second layer, and the third layer. The UE 100 selects one PUSCH group from the first PUSCH group, the second PUSCH group, or the third PUSCH group. The UE 100 maps the data to be transmitted to layers so that the data to be transmitted is the same between the layers indicated by the selected PUSCH group.

As another example, the first PUSCH group may indicate a set of the first layer and the second layer, and the second PUSCH group may indicate a set of the third layer and the fourth layer. In this case, the UE 100 selects one or more of the first PUSCH group and the second PUSCH group.

Meanwhile, in the group information, the PUSCH group may be indicated by the number of layers. In this case, for example, the first PUSCH group indicates 1 as the number of layers. The second PUSCH group indicates 2 as the number of layers. The third PUSCH group indicates 3 as the number of layers. The UE 100 selects one PUSCH group from the first PUSCH group, the second PUSCH group, or the third PUSCH group. The UE 100 maps the data to be transmitted to layers so that the data to be transmitted is the same between the layers by the number of layers indicated by the selected PUSCH group.

Meanwhile, the PUSCH group may be indicated by a set of SRIs, or may be indicated by the number of SRIs. In this case, the PUSCH group may be referred to as an SRS group. The PUSCH group may be referred to as a beam group.

In step S350, the UE 100 transmits the PUSCH and SRS to the node 200. Here, the UE 100 selects one PUSCH group from among the plurality of PUSCH groups indicated by the group information. The UE 100 maps the data to be transmitted to the layer of the PUSCH so that the data to be transmitted is the same between the layers indicated by the selected PUSCH group among the layers of the PUSCH. In other words, the UE 100 multiplexes the same data to be transmitted on some of the layers of the PUSCH.

In the example illustrated in FIG. 9, the second PUSCH group indicating a set of the second layer and the third layer is selected. As a result, the same data to be transmitted is mapped to the second layer and the third layer.

Meanwhile, the timing when the node 200 transmits the group information to the UE 100 may be any timing before the UE 100 transmits the PUSCH. For example, the timing when the node 200 transmits the group information to the UE 100 may be a timing after the CSI-RS is transmitted. That is, step S320 may be executed after step S330.

Meanwhile, the PUSCH group indicated by the group information may include all sets of layers. When the PUSCH group is selected, the UE 100 maps the data to be transmitted to the layer of the PUSCH so that the data to be transmitted is the same between all of layers of the PUSCH, as in the second embodiment.

Meanwhile, the PUSCH group indicated by the group information may include a PUSCH group indicating only one layer. When the PUSCH group is selected, the UE 100 maps the data to be transmitted to a plurality of layers of the PUSCH so that the data to be transmitted differs between the plurality of layers of the PUSCH, as in the first embodiment.

In the variation of the second embodiment, various methods in a case where the data to be transmitted is mapped to the layer using the PUSCH group have been described. Which method is suitable for mapping the data to be transmitted to the layer is classified from the viewpoint of an application in which the data to be transmitted is used.

When the data to be transmitted is mapped to the plurality of layers so that the data to be transmitted is the same between all of the plurality of layers of the PUSCH, it is suitably used for transmitting data of an application that requires high reliability and low latency rather than transmitting a large amount of data at high speed. The data of the application is, for example, data used for controlling the application, emergency notification, breaking news data, or the like.

When the data to be transmitted is mapped to the plurality of layers so that the data to be transmitted differs between all the layers among the plurality of layers of the PUSCH, it is suitably used for transmitting data of an application that requires transmission of a large amount of data at a high speed rather than high reliability. The data of the application is, for example, video or moving image data that requires a large amount and real-time processing.

The case where the data to be transmitted is mapped to the plurality of layers so that the data to be transmitted is the same between some of the plurality of layers of the PUSCH is suitably used when both high reliability and transmission efficiency are required. When both high reliability and transmission efficiency are required, there exist a case where data of a single application that requires both high reliability and transmission efficiency is transmitted and a case where data of a plurality of applications for which high reliability and transmission efficiency are required are simultaneously transmitted.

When transmitting the data of a single application that requires both high reliability and transmission efficiency, both high reliability and transmission efficiency can be achieved, for example, by mapping the same data to be transmitted to two layers at a time. The single application that requires both high reliability and transmission efficiency is, for example, an application for remote control used in a construction site, a medical site, or the like.

On the other hand, when simultaneously transmitting data of a plurality of applications that require high reliability and transmission efficiency, the same data to be transmitted is mapped to, for example, two of maximum four layers, and different data to be transmitted is mapped to the remaining two layers, so that both the application that requires high reliability and the application that requires transmission efficiency can be achieved.

In the mapping of the data to be transmitted to the layer, which method is suitable is classified from the viewpoint of the application in which the data to be transmitted is used in the above description, but may be classified from the viewpoint of QoS or a radio bearer (RB).

When QoS class identifiers (e.g., Quality Class Identifiers (QCIs), 5QI) of two logical transmission paths corresponding to a network slice (e.g., identified by S-NSSAI), a virtual communication path (e.g., a PDU session), a QoS flow (QFI), a radio bearer, or a Logical Channel (LCH) indicate high reliability, or when they indicate the same QoS class identifier, for example, four layers are divided into two PUSCH groups by pairing the layers two by two, and data of two logical transmission paths are transmitted using each of the two PUSCH groups.

When the QoS class identifiers of three logical transmission paths corresponding to the network slice, the virtual communication path, the QFI, the RB, or the LCH are different from each other, data of the logical transmission path that requires high reliability and data of the logical transmission path that requires low reliability are transmitted with different numbers of layers. For example, data of a logical transmission path corresponding to a QoS class identifier indicating high reliability is mapped to the first PUSCH group indicating a set of a first SRS and a second SRS. Data of a logical transmission path corresponding to a QoS class identifier indicating low reliability is mapped to the second PUSCH group indicating a third SRS. Data of a logical transmission path corresponding to a QoS class identifier indicating low reliability is mapped to the third PUSCH group indicating a fourth SRS.

Meanwhile, the UE 100 may map data requiring high reliability in order from a high-quality layer. The quality of the layer is determined on the basis of the CSI-RS measurement results.

The UE 100 may predict reliability in a case where a plurality of layers are combined and determine an optimal combination of layers. The reliability is evaluated by, for example, an error rate or the like, and is predicted on the basis of the CSI-RS measurement results. For example, a layer having the highest layer quality and a layer having the third highest layer quality may be combined to form a PUSCH group for satisfying high reliability (QoS).

### (3) Third Embodiment

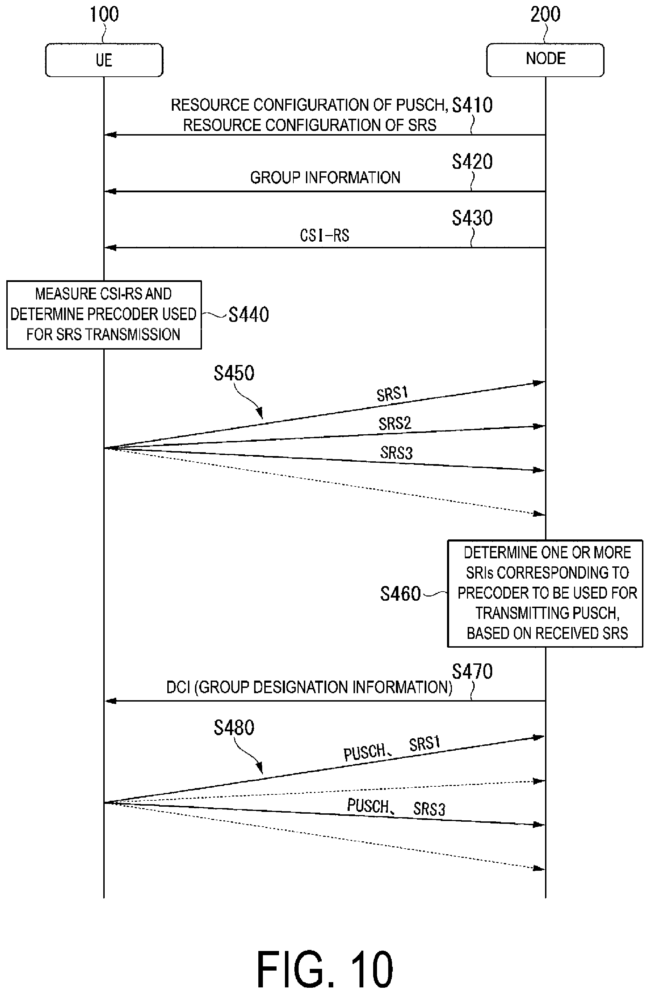

A third embodiment will be described with reference to FIG. 10, focusing mainly on the differences from the variation of the second embodiment. In the variation of the second embodiment described above, a case has been described in which the UE 100 selects a layer of the PUSCH where the data to be transmitted is the same between the layers thereof on the basis of the group information.

In the third embodiment, a case where the node 200 selects, as the group information, a layer of the PUSCH in which the data to be transmitted is the same between the layers thereof will be described. In the third embodiment, the group information is information indicating a layer belonging to the PUSCH group or the number of layers belonging to the PUSCH group. The receiver 110 receives group designation information for designating a PUSCH group from the node 200. The controller 130 selects a layer of the PUSCH in which the data to be transmitted is the same between the layers thereof on the basis of the PUSCH group designated by the group designation information received from the node 200.

### (3.1) Example of System Operation

An example of a system operation according to the third embodiment will be described with reference to FIG. 10, focusing mainly on the differences from the variation of the second embodiment. FIG. 10 is a diagram illustrating an example of a system operation according to the third embodiment. Meanwhile, the processing operations of steps S410, S430, S440, and S450 are the same as and/or similar to the processing operations of steps S110 and S120 in FIG. 7, and steps S30 and S40 in FIG. 4, therefore descriptions thereof will be omitted.

In step S420, the node 200 transmits the group information to the UE 100. The node 200 transmits the group information to the UE 100, for example, at the RRC layer. Meanwhile, the node 200 may transmit the group information to the UE 100 at the MAC layer, or may transmit the group information to the UE 100 by including it in the DCI. The UE 100 receives the group information.

In the present embodiment, in the group information, the PUSCH group is indicated by a set of SRIs. Meanwhile, in the group information, the PUSCH group may be indicated by the number of SRIs. In the group information, the PUSCH group may be indicated by the number of layers. In the group information, the PUSCH group may be indicated by a set of layers.

In step S460, the node 200 determines one or more SRIs corresponding to the precoder to be used for transmission of the PUSCH on the basis of the received SRS. Here, the node 200 determines one or more SRIs for transmitting data of the logical transmission path on the basis of an index (Quality of Service: QoS) indicating the quality of each logical transmission path.

In step S470, the node 200 transmits the DCI to the UE 100. The node 200 transmits the DCI to the UE 100, for example, through the PDCCH. Meanwhile, the node 200 may transmit the DCI to the UE 100 at the MAC layer. The UE 100 receives the DCI.

The DCI includes one or more SRIs determined by the node 200. Here, one or more SRIs are stored in an SRS resource indicator area included in the DCI. The DCI includes group designation information. The group designation information is information for designating a PUSCH group from among the PUSCH groups indicated by the group information.

Meanwhile, the DCI may include radio resource allocation information. The radio resource allocation information is, for example, a UL grant (PUSCH radio resource allocation information).

In step S480, the UE 100 transmits the PUSCH and SRS to the node 200. Here, the UE 100 selects one PUSCH group indicated by the group designation information from among a plurality of PUSCH groups indicated by the group information.

In step S480, the UE 100 transmits the PUSCH to the node 200 using the same antenna port as the antenna port for the SRS. The antenna ports for the SRS are indicated by the received one or more SRIs. Thus, the same precoder as that used for the SRS of the SRS resource indicated by the received SRI is applied to the transmission of the PUSCH. Here, the UE 100 maps the data to be transmitted to the layer of the PUSCH so that the data to be transmitted is the same between the layers indicated by the selected PUSCH group among the layers of the PUSCH. The PUSCH group is a PUSCH group selected by the UE 100 on the basis of the group designation information.

### (3.2) First Variation of Third Embodiment

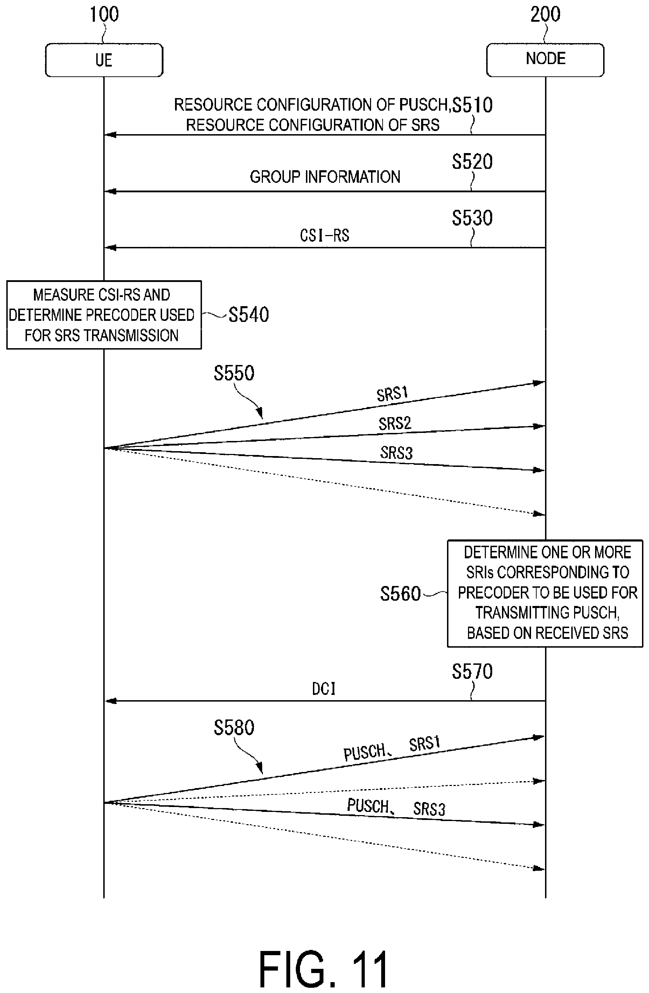

A first variation of the third embodiment will be described with reference to FIG. 11, focusing mainly on the differences from the third embodiment. In the first variation of the third embodiment, the group information is information indicating the association between a layer belonging to the PUSCH group and a logical transmission path or the association between the number of layers belonging to the PUSCH group and the logical transmission path. The controller 130 selects a layer of the PUSCH in which the data to be transmitted is the same between the layers thereof on the basis of the PUSCH group associated with the logical transmission path by the group information.

### (3.3) Example of System Operation

An example of a system operation according to the first variation of the third embodiment will be described with reference to FIG. 11, focusing mainly on the differences from the third embodiment. FIG. 11 is a diagram illustrating an example of a system operation according to the first variation of the third embodiment. Meanwhile, the processing operations of steps S510, S530, S540, S550, and S560 are the same as and/or similar to the processing operations of steps S410, S430, S440, S450, and S460 in FIG. 10, and therefore descriptions thereof will be omitted.

In step S520, the node 200 transmits the group information to the UE 100. The UE 100 receives the group information. In the first variation of the third embodiment, the content indicated by the group information is different from that in the third embodiment.

In the first variation of the third embodiment, in the group information, the PUSCH group is indicated by a set of SRIs, and the PUSCH group and the logical transmission path are associated with each other. The logical transmission path is designated by, for example, a logical channel identifier (LCID) or a data radio bearer identifier (DRB ID). Meanwhile, in the group information, the PUSCH group may be indicated by the number of SRIs, and the PUSCH group and the logical transmission path may be associated with each other.

In step S570, the node 200 transmits the DCI to the UE 100. The UE 100 receives the DCI.

In the first variation of the third embodiment, the DCI does not include the group designation information. Meanwhile, the DCI may include group designation information.

In step S580, the UE 100 transmits the PUSCH and SRS to the node 200. Here, the UE 100 selects one PUSCH group associated with the logical transmission path from among a plurality of PUSCH groups indicated by the group information. The UE 100 determines the logical transmission path on the basis of, for example, the LCID included in the DCI received in step S570. The UE 100 maps the data to be transmitted to the layer of the PUSCH so that the data to be transmitted is the same between the layers indicated by the selected PUSCH group among the layers of the PUSCH.

### (3.4) Second Variation of Third Embodiment

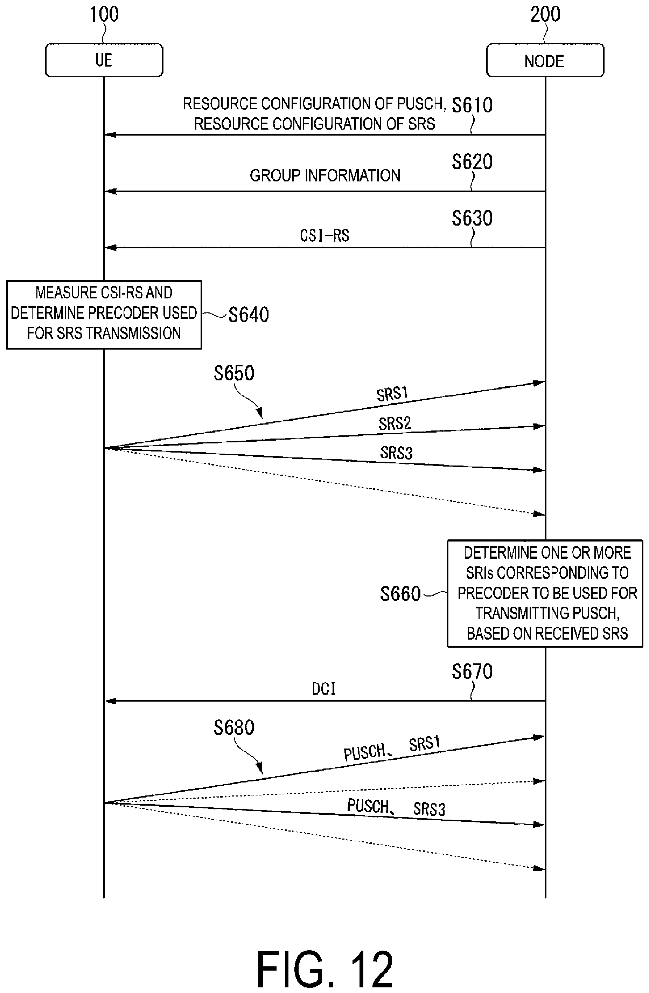

A second variation of the third embodiment will be described with reference to FIG. 12, focusing mainly on the differences from the first variation of the third embodiment. In the second variation of the third embodiment, the group information is information indicating the association between a layer belonging to the PUSCH group and a radio resource or the association between the number of layers belonging to the PUSCH group and the radio resource. The controller 130 selects a layer of the PUSCH in which the data to be transmitted is the same between the layers thereof on the basis of the PUSCH group associated with the radio resource by the group information.

### (3.5) Example of System Operation

An example of a system operation according to the second variation of the third embodiment will be described with reference to FIG. 12, focusing mainly on the differences from the first variation of the third embodiment. FIG. 12 is a diagram illustrating an example of a system operation according to the second variation of the third embodiment. Meanwhile, the processing operations of steps S610, S630, S640, S650, S660, and S670 are the same as and/or similar to the processing operations of steps S510, S530, S540, S550, S560, and S570 in FIG. 11, and therefore descriptions thereof will be omitted.

In step S620, the node 200 transmits the group information to the UE 100. The UE 100 receives the group information. In the second variation of the third embodiment, the content indicated by the group information is different from that in the first variation of the third embodiment.

In the second variation of the third embodiment, in the group information, the PUSCH group is indicated by the number of SRIs, and the PUSCH group and the radio resource are associated with each other. The radio resource is designated by, for example, a radio bearer (RB), a frequency band, or a frequency range (FR). Meanwhile, in the group information, the PUSCH group may be indicated by a set of SRIs, and the PUSCH group and the radio resource may be associated with each other.

In step S680, the UE 100 transmits the PUSCH and SRS to the node 200. Here, the UE 100 selects one PUSCH group associated with the radio resource from among a plurality of PUSCH groups indicated by the group information. The UE 100 maps the data to be transmitted to the layer of the PUSCH so that the data to be transmitted is the same between the layers indicated by the selected PUSCH group among the layers of the PUSCH.

Meanwhile, in the group information, the association between the PUSCH group and various types of information in each piece of group information described in the third embodiment, the first variation of the third embodiment, and the second variation of the third embodiment described above may be combined. For example, in the group information, the PUSCH group may be indicated by a combination of a logical transmission path and a set of SRIs. As another example, in the group information, the PUSCH group may be indicated by a combination of a logical transmission path and the number of SRIs. As another example, in the group information, the PUSCH group may be indicated by a combination of a radio resource, a logical transmission path, and the number of SRIs.

### (3.6) Third Variation of Third Embodiment

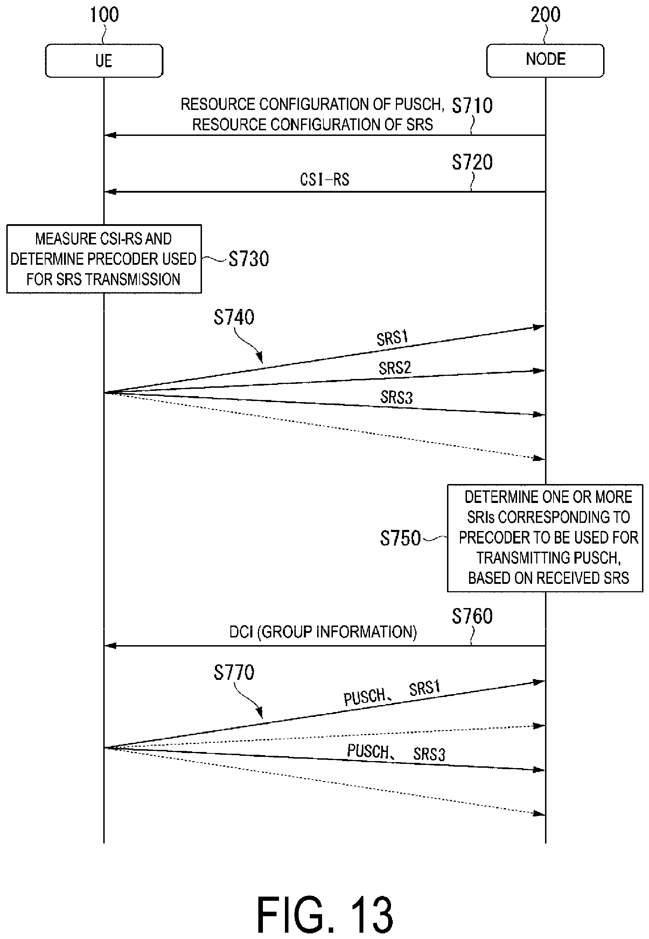

A third variation of the third embodiment will be described with reference to FIG. 13, focusing mainly on the differences from the third embodiment. In the third variation of the third embodiment, the group information is information for designating one or more PUSCH groups. The controller 130 maps the data to be transmitted to at least some of the layers of the PUSCH so that the data to be transmitted is the same between at least some of the layers of the PUSCH, on the basis of the PUSCH group indicated by the group information.

### (3.7) Example of System Operation

An example of a system operation according to the third variation of the third embodiment will be described with reference to FIG. 13, focusing mainly on the differences from the third embodiment. FIG. 13 is a diagram illustrating an example of a system operation according to the third variation of the third embodiment. Meanwhile, the processing operations of steps S710, S720, S730, S740, and S750 are the same as and/or similar to the processing operations of steps S410, S430, S440, S450, and S460 in FIG. 10, and therefore descriptions thereof will be omitted.

In step S760, the node 200 transmits the DCI to the UE 100. The node 200 transmits the DCI to the UE 100, for example, through the PDCCH. Meanwhile, the node 200 may transmit information corresponding to the DCI at the MAC layer to the UE 100. The UE 100 receives the DCI.

The DCI includes one or more SRIs determined by the node 200. The DCI includes group information and radio resource allocation information. In the third variation of the third embodiment, the group information indicates, for example, the number of layers in which the data to be transmitted is the same between the layers. Meanwhile, the group information may indicate a set of layers in which the data to be transmitted is the same between the layers.

In step S770, the UE 100 transmits the PUSCH and SRS to the node 200. Here, the UE 100 maps the data to be transmitted to the layer of the PUSCH so that the data to be transmitted is the same between the layers indicated by the group information.

As described above, in the third embodiment, and the first, second, and third variations of the third embodiment, unlike the first embodiment, the second embodiment, and the variation of the second embodiment described above, when the UE 100 transmits, to the node 200, an SRS for the node 200 to determine one or more SRIs, the UE 100 does not transmit a PUSCH to the node 200. For example, in step S450 in FIG. 10, as in step S40 in FIG. 4, the UE 100 transmits the SRS to the node 200, but does not transmit the PUSCH to the node 200.

In the third embodiment, and the first, second, and third variations of the third embodiment, the UE 100 may, for example, transmit the PUSCH to the node 200 together with the SRS in step S450 in FIG. 10. In this case, as in the first embodiment, the second embodiment, and the variation of the second embodiment, the UE 100 transmits, to the node 200, the SRS to which the precoder calculated by the UE 100 is applied and the PUSCH to which the precoder calculated by the UE 100 is applied.

According to the second embodiment, the variation of the second embodiment, the third embodiment, and the first variation, the second variation, and the third variation of the third embodiment described above, the UE 100 performs wireless communication with the node 200 in the mobile communication system. The controller 130 maps the data to be transmitted to at least some of the layers of the PUSCH so that the data to be transmitted is the same between at least some of the layers of the PUSCH. The transmitter 120 transmits the PUSCH to the node 200.

A program may be provided that causes a computer (the UE 100 and the node 200) to execute the operations according to the above-described embodiments. The program may be recorded in a computer-readable medium. Use of the computer-readable medium enables the program to be installed on a computer. Here, the computer-readable medium on which the program is recorded may be a non-transitory recording medium. The non-transitory recording medium is not particularly limited, but may be, for example, a recording medium such as a CD-ROM or a DVD-ROM.

Although one embodiment of the present invention has been described in detail above with reference to the drawings, the specific configuration is not limited to the above, and various design changes, and the like are possible within the scope that does not deviate from the gist of the present invention.

### REFERENCE SIGNS

1: Network
10: RAN
20: CN
100: UE
110: Receiver
120: Transmitter
130: Controller
140: Wireless communicator
200: Node
210: Transmitter
220: Receiver
230: Controller
240: NW communicator
250: Wireless communicator
300: CN apparatus

## Claims

1. A user equipment configured to perform wireless communication with a node in a mobile communication system, the user equipment comprising:
a controller configured to map data to be transmitted to at least some of layers of a physical uplink shared channel, the data to be transmitted being identical between the at least some layers; and
a transmitter configured to transmit the physical uplink shared channel to the node.

2. The user equipment according to claim 1, wherein the controller maps the data to be transmitted to all layers of the physical uplink shared channel, the data to be transmitted being identical between the all layers.

3. The user equipment according to claim 1, further comprising a receiver configured to receive group information from the node, the group information being for dividing to cause the at least some layers to be a group in which the data to be transmitted is identical between the at least some layers,
wherein the controller maps the data to be transmitted to the at least some layers, the data to be transmitted being identical between the at least some layers on the basis of the group information.

4. The user equipment according to claim 3, wherein the controller selects one group from among a plurality of the groups indicated by the group information, and selects the at least some layers on the basis of the selected group.

5. The user equipment according to claim 3, wherein the group information is information indicating a layer belonging to the group or the number of layers belonging to the group,
the receiver receives, from the node, group designation information for designating the group from among a plurality of the groups, and
the controller selects the at least some layers on the basis of the group designated by the group designation information received from the node.

6. The user equipment according to claim 3, wherein the group information is information indicating an association between layers belonging to the group and a logical transmission path or an association between the number of layers belonging to the group and the logical transmission path, and
the controller selects the at least some layers on the basis of the group associated with the logical transmission path by the group information.

7. The user equipment according to claim 3, wherein the group information is information indicating an association between layers belonging to the group and a radio resource or an association between the number of layers belonging to the group and the radio resource, and
the controller selects the at least some layers on the basis of the group associated with the radio resource by the group information.

8. The user equipment according to claim 3, wherein the group information is information for designating one or a plurality of the groups, and
the controller maps the data to be transmitted to the at least some of the layers of the physical uplink shared channel on the basis of the group indicated by the group information, the data to be transmitted being identical between the at least some of the layers of the physical uplink shared channel.

9. The user equipment according to claim 1, further comprising a receiver configured to receive a first reference signal transmitted by the node,
wherein the controller measures a resource of the first reference signal, calculates a precoder to be used for transmission of the physical uplink shared channel on the basis of the measurement of the resource of the first reference signal, applies the precoder to the physical uplink shared channel, and maps the data to be transmitted to the at least some of the layers of the physical uplink shared channel, the data to be transmitted being identical between the at least some of the layers, and
the transmitter transmits, to the node, the physical uplink shared channel to which the precoder has been applied.

10. A node configured to perform wireless communication with a user equipment in a mobile communication system, the node comprising:
a transmitter configured to transmit group information to the user equipment, the group information being for dividing to cause at least some layers of a physical uplink shared channel to be a group in which data to be transmitted is identical between the at least some layers; and
a receiver configured to receive, from the user equipment, the physical uplink shared channel in which the data to be transmitted is mapped to the at least some layers, the data to be transmitted being identical between the at least some layers.

11. A communication method used in a user equipment that performs wireless communication with a node in a mobile communication system, the communication method comprising:
mapping data to be transmitted to at least some of layers of a physical uplink shared channel, the data to be transmitted being identical between the at least some layers; and
transmitting the physical uplink shared channel to the node.

12. A communication method used in a node that performs wireless communication with a user equipment in a mobile communication system, the communication method comprising:
transmitting group information to the user equipment, the group information being for dividing to cause at least some layers of a physical uplink shared channel to be a group in which data to be transmitted is identical between the at least some layers; and
receiving, from the user equipment, the physical uplink shared channel in which the data to be transmitted is mapped to the at least some layers, the data to be transmitted being identical between the at least some layers.
